# FASCICULE DE BREVET EUROPEEN

(11) **EP 3 106 904 B1**
(45) Date de publication et mention de la délivrance du brevet: **05.09.2018**
(21) Numéro de dépôt: 16169991.3
(22) Date de dépôt: 17.05.2016
(51) Int. Cl.: G02B 6/38

(54) **DISPOSITIF DE CONNECTEUR DE FIBRE OPTIQUE**
LICHTLEITFASER-STECKVERBINDERVORRICHTUNG
OPTICAL FIBRE CONNECTOR DEVICE

(30) Priorité: 16.06.2015 FR 1555485
(43) Date de publication de la demande: 21.12.2016
(73) Titulaire: Nexans, 92400 Courbevoie (FR)
(72) Inventeur: MONATLIK, Jean-Christophe, 78400 CHATOU (FR); MIART, Freddy, 08000 Charleville-Mézières (FR); JEAN, Jérémy, 08350 Bosseval-et-Briancourt (FR)
(74) Mandataire: Lenne, Laurence

(56) Documents cités:
- EP-A1- 1 333 537
- WO-A1-2009/073500

## Description

L'invention concerne un dispositif de connecteur de fibre optique.

Un tel dispositif de connecteur est décrit dans le document de brevet EP 2 090 912.

Ce dispositif de connecteur comporte une fiche mâle à laquelle est connecté un câble optique comprenant une fibre optique recouverte d'une gaine externe. Cette fiche mâle peut être une fiche mâle standard de type SC, comme décrite dans la norme internationale CEI 61754-4 éditée en mars 2002, ou une fiche mâle standard d'un autre type.

Cette fiche mâle standard avec une partie du câble optique est retenue entre deux coques demi-cylindriques maintenues reliées ensemble par une bande sertie, dans une enveloppe cylindrique. Cette enveloppe est fermée à l'arrière du dispositif de connecteur par un tube rétractable à chaud sur lequel est placée une douille de matériau élastique. Un écrou de couplage externe, destiné au couplage avec un port de fiche femelle correspondante, est en butée contre un épaulement de l'enveloppe qui porte également un joint d'étanchéité torique destiné à assurer l'étanchéité à l'interface de ce dispositif et du port de fiche femelle correspondante.

Ce dispositif de connecteur, s'il est destiné à utiliser une fiche mâle standard, est cependant de constitution et de fabrication particulièrement complexes. En effet, il comporte un nombre important de pièces constitutives et sa fabrication, par exemple par sertissage et rétractation à chaud, est également compliquée.

Par ailleurs, il est indémontable, c'est-à-dire qu'en cas de défaillance d'une pièce constitutive, en particulier de la fiche mâle standard, il doit être remplacé dans sa totalité.

Le document de brevet EP 1 333 537 par ailleurs décrit un dispositif de connecteur comportant une fiche mâle et destiné à coopérer avec un agencement correspondant porté par un port d'une fiche femelle correspondante, cette fiche mâle, à laquelle est connecté un câble optique, cette fiche mâle étant retenue entre deux coques demi-cylindriques maintenues dans un corps de fiche formant une enveloppe cylindrique, de diamètre intérieur sensiblement égal avec une tolérance de glissement mutuel au diamètre extérieur des deux coques assemblées.

Outre ce corps de fiche, ce dispositif de connecteur comporte un corps presse-étoupe arrière et une pièce de liaison intermédiaire. Il comporte également un nombre important de pièces constitutives.

L'invention résout ces problèmes en proposant un dispositif de connecteur qui utilise également une fiche mâle standard, mais qui soit de constitution particulièrement simple et assure un montage et un démontage particulièrement aisés.

Pour ce faire, l'invention propose un dispositif de connecteur comportant une fiche mâle et destiné à coopérer avec un agencement correspondant porté par un port d'une fiche femelle correspondante, cette fiche mâle, à laquelle est connecté un câble optique, étant retenue entre deux coques demi-cylindriques maintenues dans une enveloppe cylindrique, de diamètre intérieur sensiblement égal avec une tolérance de glissement mutuel au diamètre extérieur des deux coques assemblées, caractérisé en ce que ladite enveloppe cylindrique est une pièce de fermeture de l'arrière du dispositif de connecteur, comportant un agencement de liaison démontable destiné à coopérer avec ledit agencement correspondant porté par le port de la fiche femelle correspondante.

Le dispositif de connecteur comporte donc uniquement trois pièces essentielles, les deux coques demi-cylindriques et la pièce de fermeture.

Le montage de ces deux pièces est particulièrement simple, ne nécessitant qu'un positionnement des deux coques demi-cylindriques et un emboîtement de ces coques dans la pièce de fermeture.

Les pièces constitutives d'un tel dispositif de connecteur peuvent également être aisément démontées et remontées, après changement de la fiche, par exemple.

Selon un mode de réalisation préféré, ladite pièce de fermeture contient un tampon d'étanchéité comportant un orifice central dans lequel est disposé ledit câble et fermant l'extrémité arrière de ladite pièce de fermeture.

De préférence, ledit agencement de liaison destiné à coopérer avec un agencement correspondant porté par le port de fiche femelle correspondante est à baïonnette.

Ladite pièce de fermeture porte avantageusement sur sa face externe un joint d'étanchéité torique destiné à assurer l'étanchéité à l'interface de ce dispositif et du port de fiche femelle correspondante, ce joint étant en butée contre une nervure annulaire de ladite pièce de fermeture.

Une seule manoeuvre, à savoir la liaison par baïonnette permet d'assurer l'étanchéité du dispositif de connecteur à son extrémité arrière par le tampon d'étanchéité et sur le port correspondant par le joint d'étanchéité torique.

De préférence, lesdites coques demi-cylindriques comportent des empreintes intérieures de retenue du boîtier de ladite fiche mâle.

Lesdites coques demi-cylindriques peuvent être positionnées l'une par rapport à l'autre par un agencement de pions et d'orifices.

Lesdites coques demi-cylindriques peuvent comporter au moins deux languettes axiales avant proéminentes, de protection de ladite fiche mâle.

De préférence, ladite fiche mâle est une fiche standard.

L'invention est décrite ci-après plus en détail à l'aide de figures ne représentant qu'un mode de réalisation préféré de l'invention.
La figure 1 est une vue éclatée en perspective d'un dispositif de connecteur de fibre optique, conforme à l'invention.
La figure 2 est une vue en perspective d'un dispositif de connecteur de fibre optique, conforme à l'invention, assemblé sur le port de fiche femelle correspondante.
Les figures 3 et 4 sont des vues en perspective de détail.
La figure 5 est une vue en perspective d'un port de fiche femelle correspondante.

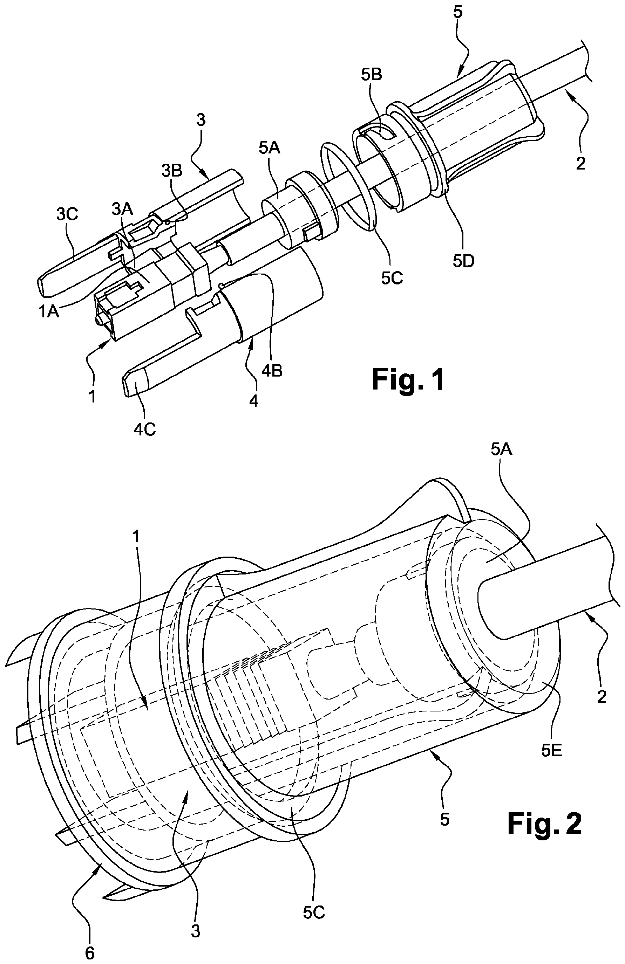

Comme visible sur les figures 1 et 2, un dispositif de connecteur conforme à l'invention comporte une fiche mâle 1 standard, en particulier de type SC, à laquelle est connecté un câble optique 2 comprenant une fibre optique recouverte d'une gaine externe. Cette fiche mâle 1 est retenue entre deux coques demi-cylindriques 3, 4 maintenues dans une enveloppe cylindrique 5.

Cette enveloppe cylindrique est une pièce de fermeture 5 de l'arrière du dispositif de connecteur, de diamètre intérieur sensiblement égal au diamètre extérieur des deux coques 3, 4 assemblées avec une tolérance de glissement mutuel.

Cette pièce de fermeture 5 contient un tampon d'étanchéité 5A comportant un orifice central dans lequel est disposé ledit câble 2 et fermant l'extrémité arrière de la pièce de fermeture 5. Ce tampon d'étanchéité 5A est fendu transversalement pour permettre la mise en place du câble dans l'orifice central.

Elle comporte une rainure de liaison à baïonnette 5B destinée à coopérer avec un agencement correspondant porté par le port 6 de fiche femelle correspondante et porte sur sa face externe un joint d'étanchéité torique 5C destiné à assurer l'étanchéité à l'interface de ce dispositif et du port 6 de fiche femelle correspondante, ce joint 5C étant en butée contre une nervure annulaire 5D de la pièce de fermeture 5 et logé dans une rainure périphérique à l'avant de cette nervure 5D.

Les coques demi-cylindriques 3, 4 comportent des empreintes intérieures de retenue 3A, 4A du boîtier 1A de la fiche mâle 1 et sont positionnées l'une par rapport à l'autre par un agencement de pions et d'orifices 3B, 4B.

Elles comportent au moins deux languettes axiales avant proéminentes vers l'avant 3C, 4C, de protection de la fiche mâle 1.

Une fois ces pièces montées et le dispositif de connecteur assemblé sur le port 6 de fiche femelle correspondante, comme représenté sur la figure 2, le boîtier 1A de la fiche mâle 1 standard, est enserrée entre les empreintes intérieures de retenue 3A, 4A des deux coques demi-cylindriques 3, 4, positionnées ensemble grâce à l'agencement de pions et d'orifices 3B, 4B et maintenues par glissement sur leur surface externe de la pièce de fermeture 5 dont l'agencement de liaison à baïonnette 5B coopère avec un agencement correspondant porté par le port 6 de fiche femelle correspondante. Une rotation angulaire réduite de l'ordre de 20 degrés permet d'assurer la connexion en créant une double étanchéité, au niveau du tampon d'étanchéité 5A et du joint d'étanchéité torique 5C.

Par cette liaison à baïonnette, le tampon d'étanchéité 5A est comprimé sur une bride annulaire 5E à l'extrémité arrière de la pièce de fermeture 5 et ferme cette extrémité arrière. Le joint torique 5C en butée contre la nervure annulaire 5D de la pièce de fermeture 5 assure l'étanchéité à l'interface entre le dispositif de connecteur et port 6 de fiche femelle correspondante.

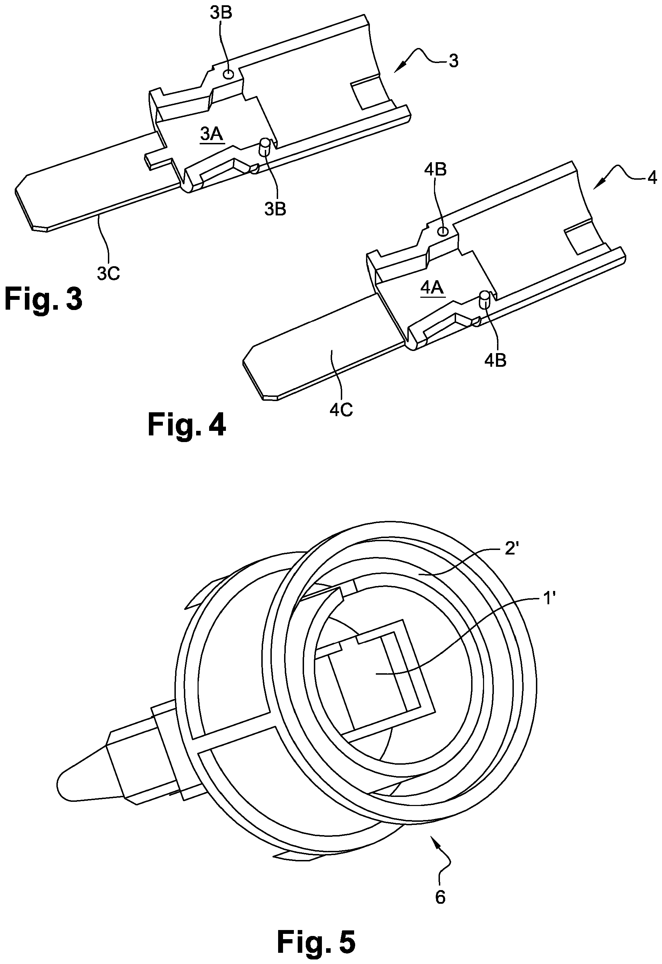

Les figures 3 et 4 représentent les deux coques demi-cylindriques 3, 4.

Elles sont ici représentées avec des empreintes intérieures de retenue 3A, 4A du boîtier 1A d'une fiche mâle 1 de type SC.

La figure 5 représente le port 6 portant une fiche femelle correspondante 1'.

Elle comporte un espace annulaire 2' destiné à recevoir l'extrémité avant de la pièce de fermeture 5 et comportant l'agencement correspondant à la rainure de liaison par baïonnette 5B de la pièce de fermeture.

## Revendications

1. Dispositif de connecteur comportant une fiche mâle (1) et destiné à coopérer avec un agencement correspondant porté par un port (6) d'une fiche femelle correspondante, cette fiche mâle, à laquelle est connecté un câble optique (2), étant retenue entre deux coques demi-cylindriques (3, 4) maintenues dans une enveloppe cylindrique, de diamètre intérieur sensiblement égal avec une tolérance de glissement mutuel au diamètre extérieur des deux coques assemblées (3, 4) et comportant un agencement de liaison démontable destiné à coopérer avec ledit agencement correspondant porté par le port (6) de la fiche femelle correspondante, **caractérisé en ce que** ladite enveloppe cylindrique est une pièce de fermeture (5) de l'arrière du dispositif de connecteur.

2. Dispositif selon la revendication précédente, **caractérisé en ce que** ladite pièce de fermeture (5) contient un tampon d'étanchéité (5A) comportant un orifice central dans lequel est disposé ledit câble (2) et fermant l'extrémité arrière de ladite pièce de fermeture (5).

3. Dispositif selon la revendication 1 ou 2, **caractérisé en ce que** ledit agencement de liaison destiné à coopérer avec un agencement correspondant porté par le port (6) de fiche femelle correspondante est à baïonnette (5B).

4. Dispositif selon l'une des revendications précédentes, **caractérisé en ce que** ladite pièce de fermeture (5) porte sur sa face externe un joint d'étanchéité torique (5C) destiné à assurer l'étanchéité à l'interface de ce dispositif et du port (6) de fiche femelle correspondante, ce joint étant en butée contre une nervure annulaire (5D) de ladite pièce de fermeture.

5. Dispositif selon l'une des revendications précédentes, **caractérisé en ce que** lesdites coques demi-cylindriques (3, 4) comportent des empreintes intérieures (3A, 4A) de retenue du boîtier (1A) de ladite fiche mâle.

6. Dispositif selon l'une des revendications précédentes, **caractérisé en ce que** lesdites coques demi-cylindriques (3, 4) sont positionnées l'une par rapport à l'autre par un agencement de pions et d'orifices (3B, 4B).

7. Dispositif selon l'une des revendications précédentes, **caractérisé en ce que** lesdites coques demi-cylindriques (3, 4) comportent au moins deux languettes axiales avant proéminentes (3C, 4C), de protection de ladite fiche mâle (1).

8. Dispositif selon l'une des revendications précédentes, **caractérisé en ce que** ladite fiche mâle (1) est une fiche standard.

## Patentansprüche

1. Verbindungsvorrichtung, umfassend einen Steckerstreifen (1), die zum Zusammenwirken mit einer entsprechenden Anordnung bestimmt ist, die von einem Anschluss (6) einer entsprechenden Steckbuchse getragen wird, wobei der Steckerstreifen, an den ein Lichtwellenleiter (LWL) (2) angeschlossen ist, zwischen zwei halbzylindrischen Schalen (3, 4) festgehalten zu werden, die in einer zylindrischen Hülle enthalten sind, deren Innendurchmesser - mit einer gegenseitigen Abrutschtoleranz - im Wesentlichen gleich dem Außendurchmesser der beiden zusammengebauten Schalen (3, 4) ist, und umfassend eine abnehmbare Verbindungsanordnung zum Zusammenwirken mit der vom Anschluss (6) der Steckbuchse getragenen entsprechenden Anordnung, **dadurch gekennzeichnet, dass** die zylindrische Hülle ein Schließstück (5) der Rückseite der Verbindungsvorrichtung ist.

2. Vorrichtung nach dem vorstehenden Anspruch, **dadurch gekennzeichnet, dass** das Schließstück (5) einen Dichtstopfen (5A) mit einer zentralen Öffnung, in der der LWL (2) angeordnet ist, enthält und das hintere Ende des Schließstücks (5) abschließt.

3. Vorrichtung nach Anspruch 1 oder 2, **dadurch gekennzeichnet, dass** die Verbindungsanordnung zum Zusammenwirken mit einer vom Anschluss (6) der entsprechenden Steckbuchse getragenen Anordnung bajonettartig (5B) ist.

4. Vorrichtung nach einem der vorstehenden Ansprüche, **dadurch gekennzeichnet, dass** das Schließstück (5) auf seiner Außenfläche eine torische Verschlussdichtung (5C) zur Gewährleistung der Abdichtung der Schnittstelle dieser Vorrichtung und des Anschlusses (6) der entsprechenden Steckbuchse trägt, wobei die Verschlussdichtung auf einer ringförmigen Rippe (5D) des Schließstücks aufliegt.

5. Vorrichtung nach einem der vorstehenden Ansprüche, **dadurch gekennzeichnet, dass** die halbzylindrischen Schalen (3, 4) interne Prägungen (3A, 4A) zum Festhalten des Gehäuses (1A) des Steckerstreifens aufweisen.

6. Vorrichtung nach einem der vorstehenden Ansprüche, **dadurch gekennzeichnet, dass** die halbzylindrischen Schalen (3, 4) durch eine Anordnung von Stiften und Öffnungen (3B, 4B) relativ zueinander positioniert werden.

7. Vorrichtung nach einem der vorstehenden Ansprüche, **dadurch gekennzeichnet, dass** die halbzylindrischen Schalen (3, 4) mindestens zwei nach vorn hervorstehende axiale Laschen (3C, 4C) zum Schutz des Steckerstreifens (1) aufweisen.

8. Vorrichtung nach einem der vorstehenden Ansprüche, **dadurch gekennzeichnet, dass** der Steckerstreifen (1) ein Standardstecker ist.

## Claims

1. Connector device comprises a male plug (1) designed to interact with a corresponding fitting carried by a port (6) of a corresponding female socket, wherein the male plug, to which is connected an optical cable (2), is held between two semi-cylindrical shells (3, 4) that are retained in a cylindrical sheath of substantially equal inner diameter with a mutual slip tolerance with respect to the outer diameter of the two assembled shells (3, 4), and which comprises a dismountable connection fitting for interacting with the corresponding fitting carried by the port (6) of the corresponding female socket, **characterized in that** the cylindrical sheath serves as a closure part (5) of the rear of the connector device.

2. Device according to the preceding claim, **characterized in that** the closure part (5) contains a sealing plug (5A) which has a central orifice in which is arranged the cable (2) and closes the rear end of the closure part (5).

3. Device according to claim 1 or 2, **characterized in that** the connection fitting designed to interact with a corresponding fitting carried by the port (6) of the corresponding female socket is in the form of a bayonet (5B).

4. Device according to one of the preceding claims, **characterized in that** the closure member (5) carries on its outer face a sealing ring (5C) to seal the interface of this device with the port (6) of the corresponding female socket, wherein this seal abuts against an annular rib (5D) of the closure piece.

5. Device according to one of the preceding claims, **characterized in that** the semi-cylindrical shells (3, 4) comprise internal elements (3A, 4A) to retain the housing (1A) of the male plug.

6. Device according to one of the preceding claims, **characterized in that** the half-cylindrical shells (3, 4) are positioned relative to each other by an arrangement of pins and orifices (3B, 4B).

7. Device according to one of the preceding claims, **characterized in that** the half-cylindrical shells (3, 4) comprise at least two tongues (3C, 4C) protruding axially forwards to protect the male plug (1).

8. Device according to one of the preceding claims, **characterized in that** the male plug (1) is a standard plug.
